## Europäisches Patentamt

## European Patent Office

## Office européen des brevets

(11) Publication number: **0 066 367**
**A1**

# (12) EUROPEAN PATENT APPLICATION

(21) Application number: **82302177.9**

(22) Date of filing: **28.04.82**

(51) Int. Cl.³: **F 16 H 45/02**

(30) Priority: **01.06.81 US 269344**

(43) Date of publication of application:
**08.12.82 Bulletin 82/49**

(84) Designated Contracting States:
**DE FR GB**

(71) Applicant: **GENERAL MOTORS CORPORATION**
**General Motors Building 3044 West Grand Boulevard**
**Detroit Michigan 48202(US)**

(72) Inventor: **Mathues, Thomas Patrick**
**1573 King Richard Parkway**
**Miamisburg Ohio 45342(US)**

(74) Representative: **Breakwell, John Neil Bower et al,**
**Patent Section General Motors Limited P.O. Box 242**
**Delaware Drive**
**Milton Keynes MK15 8HA(GB)**

(54) Controlled-slip torque converter clutches.

(57) A torque converter clutch (28) has an engagement chamber (24) and a disengagement chamber (26). The clutch engagement force, and therefore the torque capacity of the clutch (28), is established by the pressure differential between the engagement (24) and disengagement chamber (26). Fluid flow from the engagement chamber (24) to the disengagement chamber (26) is controlled by a sliding valve member (40) opened on by opposing governor weights (46) and (52) which are rotated with respective input and output members (10) and (28) of the torque converter. The valve member (40) can be controlled to effect complete clutch engagement if desired.

*Fig.1*

EP 0 066 367 A1

CONTROLLED-SLIP TORQUE CONVERTER CLUTCHES

This invention relates to controlled-slip torque converter clutches, primarily for use in motor vehicles.

It is well-known that a friction clutch member utilized in parallel with a hydrodynamic torque converter can provide increased efficiency within the drive system. The torque converter clutch can be operated to provide complete bypassing of the torque converter, or it can be maintained slippingly engaged such that a portion of the torque transmitted passes through the torque converter. If complete clutch engagement is effected, it is necessary to incorporate a vibration damper in series drive arrangement with the clutch member; a slipping clutch avoids the need for a vibration damper, as this function is provided by the torque converter.

There are numerous control systems available which will maintain the torque converter clutch in a controlled-slip mode. Examples of such control systems are disclosed in U.S. Patent Nos. 3,693,478 (Malloy), 3,966,031 (Peterson Jr. et al.), 3,966,032 (Koivunen) and 4,091,899 (Stevenson).

These various controls provide either speed-sensitive control or torque-sensitive control. For example, U.S. Patent No. 3,966,032 discloses a control which maintains a fixed percentage of slip speed between the input and output members. The engagement phase and disengagement phase of such torque converter clutches is accomplished by a flow reversal in the torque converter. Such flow reversal can be accomplished by utilizing the control system shown in U.S. Patent Nos. 3,693,478 or 3,252,352 (General et al.).

The present invention is concerned with a controlled-slip clutch in a torque converter drive, having means for directing fluid to an engagement chamber for the clutch and from a disengagement chamber for the clutch, and a valve disposed adjacent the clutch for controlling fluid communication from the engagement chamber to the disengagement chamber, and is characterised in that output speed-sensitive control means is rotatable with an output member of the torque converter and is effective to operate the valve to increase the fluid communication with increasing rotary speed of the clutch, thereby reducing the torque capacity of the clutch and increasing the speed differential in the torque converter, and that input speed-sensitive control means is rotatable with an input member of the torque converter and is effective to operate the valve to decrease the fluid communication with increasing rotary speed of the input member, thereby increasing the torque capacity of the clutch and decreasing the speed differential in the torque converter, the input and output speed-sensitive control means interacting to maintain the clutch slippingly engaged so that the clutch and the torque converter share in the torque transmitted.

The present invention thus provides for speed-sensitive control of a torque converter clutch which is responsive to the difference between clutch input speed and clutch output speed. In a preferred arrangement in accordance with the present invention, the input and output members of the clutch are provided with governor weights which apply opposing forces to a slidable control valve member that is operable to control a restricted opening between the engagement and disengagement chambers such that the pressure differential therebetween, which acts on the clutch pressure plate, is maintained in accordance with the speed differential between the input and output members of the torque converter. Since, as is well-known, the pressure differential on a clutch pressure plate

-3-

determines the torque-transmitting capability of the clutch, the clutch of the present invention can be maintained in a controlled-slip operating mode such that a portion of the overall torque is transmitted by the clutch and the remainder of the torque is transmitted by the torque converter in a paralled power path.

The present invention may also utilize a flow reversal, such that when complete disengagement of the clutch is desired, fluid pressure is directed through the disengagement chamber prior to filling of the torque converter.

In the drawing:

Figure 1 is a fragmentary longitudinal section, with parts in elevation and parts broken away, of a torque converter and torque converter clutch with one embodiment of a control in accordance with the present invention; and

Figure 2 is an enlarged view of a portion of Figure 1.

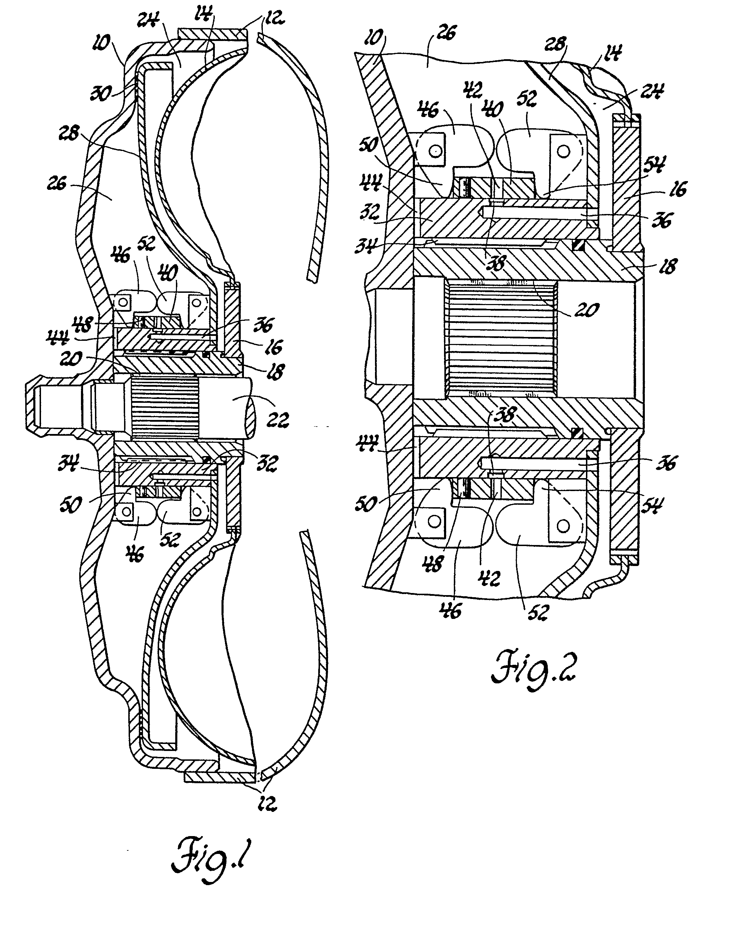

In Figure 1 of the drawing, an input shell 10 is adapted to be connected to a prime mover such as an internal combustion engine. The input shell 10 is secured to a torque converter impeller 12 which is of conventional design. The impeller 12 co-operates with a turbine 14 and a conventional stator, not shown, to provide a conventional fluid drive. The turbine 14 includes a hub 16 which is secured to a sleeve shaft 18 having formed therein a spline 20. The spline 20 is drivingly connected to a transmission drive shaft 22, which in turn is connected to drive an automatic transmission such as that shown in U.S. Patent No. 3,321,056 (Winchell et al.).

The space between the turbine 14 and the input shell 10 is divided into an engagement chamber 24 and a disengagement chamber 26 by a clutch pressure plate 28.

-4-

The clutch pressure plate 28 has bonded thereto an annular friction surface 30 which is adapted to selectively frictionally engage the inner surface of the input shell 10. The pressure plate 28 is secured to a sleeve member 32 which in turn is splined at 34 to the sleeve shaft 18. The sleeve member 32 has formed therein fluid passages 36 which are in fluid communication with the engagement chamber 24. Each passage 36 is intersected by a radially extending fluid passage 38 which opens to the outer surface of the sleeve 32.

An annular valve member 40 is disposed about the outer surface of sleeve 32 and is adapted to be axially slidable relative to the sleeve 32. The valve member 40 is preferably non-rotatable relative to the sleeve 32, and has formed therein a plurality of restricted flow passages 42 which may be selectively aligned with the passages 38. When aligned with the passages 38, the passages 42 will permit fluid flow from the chamber 24 through the passages 36 and 38 to the chamber 26. Fluid in the chamber 26 passes through the restricted flow passages 44 and is returned to the transmission sump or cooler in well-known manner. The amount of fluid flow between the chambers 24 and 26 will be determined by the opening of the passages 42, such that increasing the opening of the passages 42 will result in a lesser pressure differential between the chambers 24 and 26. The torque capacity of the torque converter clutch constituted by the pressure plate 28 and friction surface 30 will decrease as the pressure differential is reduced, and vice versa.

The input shell 10 has pivotally disposed thereon a plurality of flyweights 46 which are adapted to urge the valve member 40 rightwardly, as viewed in Figures 1 and 2. Since the flyweights 46 rotate at the speed of the input shell 10, which may be substantially different from the rotating speed of the valve member 40, a roller thrust bearing assembly 48 is disposed between the valve member 40 and the operating arms 50 of the flyweights 46. The pressure plate 28 has pivotally mounted thereon a plurality of flyweights 52 each having an operating arm 54 which abuts the valve member 40, the flyweights being operable to urge the valve member 40 leftwardly, as viewed in Figures 1 and 2.

When the valve member 40 moves rightwardly, fluid flow between the chambers 24 and 26 is reduced, and if the valve member 40 moves sufficiently to the right, the fluid flow between these chambers can be completely shut off. As the valve member 40 moves to the left, the fluid flow between the chambers 24 and 26 increases. As pointed out above, the pressure differential between the chambers 24 and 26 is affected by the fluid flow. If the fluid flow between the chambers is completely shut off, the torque converter clutch will have its maximum torque capacity and will therefore be conditioned for complete engagement. As the pressure differential between the chambers 24 and 26 decreases, such that flow increases, the torque-transmitting capacity of the torque converter clutch will be reduced, such that slipping engagement and thereby a speed differential between the input shell 10 and the turbine 14 is maintained.

The closing of the valve 40 and the corresponding increase in torque capacity of the torque converter clutch is accomplished by the flyweights 46, which are rotating at input speed. The flyweights 52 cause the opposite effect on the valve 40. If the torque converter control system, not shown, has been conditioned for engagement of the torque converter clutch, fluid flow to the torque converter will be reversed, such that the disengagement chamber 26 will be connected to the sump through the passages 44, whereas the engagement chamber 24 will be connected to the pressure source, not shown. At this time the input shell 10 is rotating substantially faster than the turbine 14 and the pressure plate 28. If the flyweights 46 and 52 are of substantially the same size, the force imposed on the valve 40 by the flyweights 46 will be greater than the force imposed on the valve 40 by the flyweights 52. The higher force imposed by the flyweights 46 will cause the valve 40 to move rightwardly such that the pressure differential between the chambers 24 and 26 will be high, resulting in engagement of the friction surface 30 with the input shell 10.

As a result of this frictional engagement, the torque converter clutch will allow the turbine 14 to increase in speed and approach the speed of the input shell 10. As the ratio of these two speeds approaches unity, the force in the flyweights 52 will become substantially equal to the force in the flyweights 46, such that the valve member 40 will be moved slightly to increase the fluid flow between the chambers 24 and 26, resulting in a decrease in the torque capacity and controlled slipping engagement of the friction surface 30 with the input shell 10. If the operator calls for increased input speed, the speed of the flyweights 46 will increase, and the valve 40 will be operated as described above. The torque converter clutch will respond to the increased engine speed to again assume the desired slipping engagement.

If the engine speed should decrease, the force of the flyweights 46 will decrease, and since the clutch will slip relatively in the opposite direction, the flyweights 52 will be imposing a larger force on the valve 40, resulting in opening of the valve 40 and therefore disengagement of the friction surface 30 from

the input shell 10. Thus, a coast release of the torque converter clutch is provided; as is well-known this is a desirable feature, as it reduces drive line shock.

The operating characteristics and slip ratio of the torque converter clutch can be controlled by appropriate selection of the flyweights. If desired, some of the input flyweights 46 can be spring-loaded out of operation until a predetermined input speed is reached. Above this input speed they would become operable and could, if desired, enforce complete engagement of the torque converter clutch. The slip ratio between the torque converter clutch and the input shell 10 can be controlled by the mass of the flyweights and by their respective operating arms 50 and 54. It is also possible to spring-load the valve member 40 in either direction. Also the size and shape of the restricted passage 42 can be utilized to control flow capacity and therefore pressure differential.

It is also possible to design the valve member 40 such that the restricted passages 42 are never completely closed, thus providing a continuous minimum flow relationship between the chambers 24 and 26. It is possible to control this continuous flow relationship at a point providing the desired minimum speed differential between the torque converter clutch and the input shell 10.

Claims:

1. A controlled-slip clutch in a torque converter drive, having means for directing fluid to an engagement chamber (24) for the clutch and from a disengagement chamber (26) for the clutch, and a valve (40) disposed adjacent the clutch for controlling fluid communication from the engagement chamber to the disengagement chamber, characterised in that output speed-sensitive control means (52) is rotatable with an output member (28) of the torque converter and is effective to operate the valve (40) to increase the fluid communication between the chambers with increasing rotary speed of the clutch, thereby reducing the torque capacity of the clutch and increasing the speed differential in the torque converter, and that input speed-sensitive control means is rotatable with an input member (10) of the torque converter and is effective to operate the valve to decrease the fluid communication between the chambers with increasing rotary speed of the input member, thereby increasing the torque capacity of the clutch and decreasing the speed differential in the torque converter, the input and output speed-sensitive control means interacting to maintain the clutch slippingly engaged so that the clutch and the torque converter share in the torque transmitted.

2. A controlled-slip clutch according to claim 1, characterised in that the input and output speed-sensitive control means include respective flyweights (46 and 52) interacting to maintain the clutch slippingly engaged during a portion of the operating speed range of the torque converter so that the slipping clutch and the torque converter share in the torque transmitted during the slipping engagement.

3. A controlled-slip clutch according to claim 1, characterised in that a pressure plate (28) has a hub (32) formed with a fluid passage (36), the engagement chamber (24) is disposed on one side of the pressure plate, the disengagement chamber (26) is disposed on the other side of the pressure plate, the valve comprises an annular valve member (40) slidably disposed for axial movement on the hub, and the output speed-sensitive control means (52) is rotatable with the pressure plate and operates the annular valve to increase the fluid communication with increasing rotary speed of the pressure plate, thereby reducing the torque capacity of the slipping clutch and increasing the speed differential between the pressure plate and the input member (10) of the torque converter.

4. A controlled-slip clutch according to claim 3, characterised in that the output speed-sensitive control means comprises output flyweight means (52) pivotally mounted on the pressure plate (28) and rotatable therewith, the output flyweight means having an operating arm (54) abutting one end of the annular valve member (40) to urge the annular valve member in one axial direction, to increase the fluid communication between the chambers with increasing rotary speed of the pressure plate, and that the input speed-sensitive control means comprises input flyweight means (46) pivotally mounted on and rotatable with the input member (10) of the torque converter and having an operating arm (50) effective to urge the annular valve member in the opposite axial direction, to decrease the fluid communication between the chambers with increasing rotary speed of the input member.

**Fig.1**

**Fig.2**

0066367

European Patent Office

**EUROPEAN SEARCH REPORT**

Application number

EP 82 30 2177.9

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| Y | <u>DE - A1 - 2 643 558</u> (VOITH GETRIEBE) <br> * claims 1, 3; page 10, lines 10 to 25; fig. 1 to 3, 6 * | 1-4 | F 16 H 45/02 |
| D,Y | <u>US - A - 3 966 032</u> (E.A. KOIVUNEN) <br> * claim 3; fig. 1 * | 1-4 | |
| A | <u>GB - A - 1 442 263</u> (ZAHNRADFABRIK FRIEDRICHSHAFEN) <br> * claim 1; fig. * | 1 | |
| A | <u>DE - A1 - 2 619 532</u> (GENERAL MOTORS) <br> * claims 1 to 3; page 19, lines 1 to 21; fig. 1 * <br>    & US - A - 3 977 502 | 1 | TECHNICAL FIELDS SEARCHED (Int.Cl. ³) <br><br> F 16 H 45/00 |
| A | <u>US - A - 4 181 203</u> (J.D. MALLOY) | | |
| A | <u>GB - A - 1 325 649</u> (GENERAL MOTORS) | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 05-08-1982 | LEMBLE |

EPO Form 1503.1 06.78